# EUROPÄISCHE PATENTSCHRIFT

(11) **EP 2 139 291 B1**
(45) Veröffentlichungstag und Bekanntmachung des Hinweises auf die Patenterteilung: **03.08.2011**
(21) Anmeldenummer: 08011715.3
(22) Anmeldetag: 27.06.2008
(51) Int. Cl.: H04W 74/04, H04W 88/02

(54) **Verfahren zur Kommunikation über einen Halb-Duplex-Funkkanal in einem Funknetzwerk**
Method for communication using a half duplex radio channel in a radio network
Procédé de communication utilisant un canal semi-duplex dans un réseau radio

(43) Veröffentlichungstag der Anmeldung: 30.12.2009
(73) Patentinhaber: Siemens Aktiengesellschaft, 80333 München (DE)
(72) Erfinder: Hofmann, Dieter, 91353 Hausen (DE); Steinmill, Peter, 90592 Schwarzenbruck (DE)

(56) Entgegenhaltungen:
- WO-A-02/41520
- WO-A-99/26430

## Beschreibung

Die Erfindung betrifft ein Kommunikationsverfahren für ein Funknetzwerk, mit mindestens zwei Teilnehmern, wobei ein Funkkanal zwar in beiden Richtungen zwischen den Teilnehmern genutzt wird, aber dies stets nur nacheinander in der einen und dann in der anderen Richtung, das heißt nicht gleichzeitig in beiden Richtungen und wobei den Teilnehmern jeweils Sen- dezeitpunkte in einem Zeitraster vorgegeben werden, zu denen ein Teilnehmer dem jeweils anderen Teilnehmer ein Nutztelegramm zusenden darf.

In diversen Kommunikationsanwendungen zum Datenaustausch steht nur ein einziger Funkkanal zur Verfügung. In diesem Fall kommen Halb-Duplexverfahren zum Einsatz. Dabei werden Telegramme nur nacheinander in der einen oder anderen Richtung versendet. Die gleichzeitige Nutzung einer solchen Funkstrecke in beiden Richtungen würde zu Kollisionen führen und muss daher vermieden werden. Um derartige Kollisionen auszuschließen, erfolgt beim "Polling" eine zyklische Abfrage. Hierbei wird zum Beispiel von einem Master an einen Slave eines Kommunikationsnetzwerks in der einen Richtung eine Abfrage versandt und der Slave antwortet anschließend mit dem Übersenden eines vorliegenden Nutztelegramms in der anderen Richtung. Bei Nichtvorliegen von Nutzungsdaten kann dies im Antworttelegramm mitgeteilt werden. Bei diesem Halb-Duplexverfahren werden für die Abfragen und Antworttelegramme entsprechend lange Zeiten reserviert, was bei vielen Abfragen lange Reaktionszeiten zur Folge hat.

Aus der Internationalen Anmeldung WO 02/41520 A2 ist ein Verfahren bekannt, bei dem Daten zwischen einer Basisstation und mehreren Mobilstationen mittels TDD-Rahmen übertragen werden und in Abwärtsrichtung den Mobilstationen über ein Kontrolldatenfeld Scheduling-Information mitgeteilt werden, die angeben wann Datenübertragungen in Aufwärtsrichtung möglich sind.

Daher liegt der Erfindung die Aufgabe zu Grunde, ein Verfahren der oben genannten Art dahingehend zu verbessern, dass möglichst kurze Reaktionszeiten erreicht werden.

Die Aufgabe wird mit einem Verfahren mit den Merkmalen nach Anspruch 1 gelöst. Dabei ist in jedem Nutztelegramm am Anfang ein Erkennungssignal eingebettet oder ein solches Erkennungssignal dem Nutztelegramm vorangestellt , und das Erkennungssignal dient dazu , dem empfangenden Teilnehmer die Belegung der Funkstrecke mitzuteilen. Ein Teilnehmer sendet nur dann ein Nutztelegramm im zulässigen Sendezeitpunkt aus, wenn vom anderen Teilnehmer kein Erkennungssignal empfangen wurde. Das Zeitintervall von einem Sendezeitpunkt im Zeitraster, der zur Aussendung eines Nutztelegramms einem Teilnehmer zugeordnet ist, zum folgenden Sendezeitpunkt in dem Zeitraster, der zur Aussendung eines Nutztelegramms dem jeweils anderen Teilnehmer zugeordnet ist, ist durch die Laufzeit des Erkennungssignals auf der Funkstrecke zwischen beiden Teilnehmern bestimmt. Durch die Anwendung des Erkennungssignals lässt sich eine performantere Informationsübertragung bei einkanaliger Funkstrecke als nach dem bisher bekannten Halb-Duplexverfahren erreichen. Diese Ausführungsform ermöglicht besonders kurze Reaktionszeiten.

Vorteilhafte Weiterbildungen der Erfindung sind den Ansprüchen 2 bis 10 zu entnehmen.

Es ist von Vorteil, wenn gemäß Anspruch 2 die dem einen Teilnehmer vorgegebenen Sendezeitpunkte zum Aussenden eines Nutztelegramms gegenüber den Sendezeitpunkten, die dem jeweils anderen Teilnehmer zum Aussenden eines Nutztelegramms vorgegeben sind, zeitsynchron sind.

Eine weitere vorteilhafte Ausführungsform der Erfindung ist gegeben, wenn gemäß Anspruch 3 die Sendezeitpunkte zum Aussenden eines Nutztelegramms den beiden Teilnehmern jeweils durch ein Zeitlineal mit einem Zeitraster vorgegeben werden, das durch das Zeitintervall bestimmt ist.

Zur sicheren Übertragung des Erkennungssignals ist es besonders vorteilhaft, wenn gemäß Anspruch 4 das Erkennungssignal zumindest teilweise bitcodiert ist.

Im Folgenden wird ein Ausführungsbeispiel der Erfindung anhand einer Zeichnung näher erläutert. Es zeigen:
- FIG 1: ein Blockschaltbild einer Prüfstation zur Fahrzeugdiag- nose mit dem erfindungsgemäßen Kommunikationsverfahren über einen Funkkanal und
- FIG 2: ein Zeitlineal mit einem Zeitraster für das erfindungs- gemäße Kommunikationsverfahren.

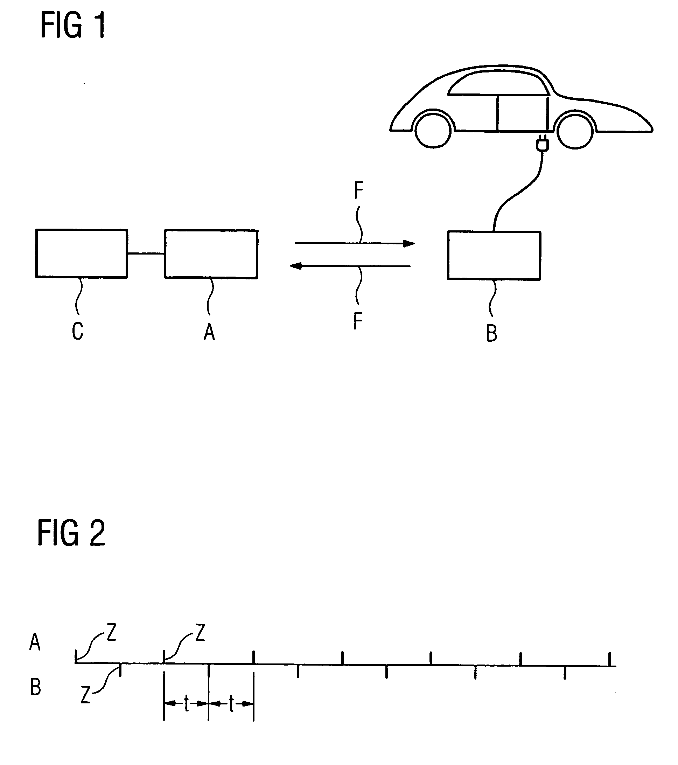

FIG 1 zeigt einen Funkkanal F zwischen zwei Teilnehmern A und B. Der Funkkanal F kann nur nacheinander in der einen und dann in der anderen Richtung genutzt werden, um Kollisionen bei der Kommunikation zu vermeiden. Im vorliegenden Ausführungsbeispiel wird der Funkkanal F für die Fahrzeugdiagnose eingesetzt. Der Teilnehmer A ist daher mit einer Auswerteeinheit C verbunden und der Teilnehmer B zum Beispiel über einen Diagnosestecker an ein Fahrzeug angeschlossen. Der Teilnehmer B nimmt die Fahrzeugdaten auf und sendet sie über den Funkkanal F an den Teilnehmer A, der diese an die Auswerteeinheit C zur Auswertung weiterleitet. Nach Auswertung der Fahrzeugdaten in der Auswerteeinheit C kann der Teilnehmer B über den Funkkanal F eine Vorgabe zur Änderung einer Einstellung am Fahrzeug erhalten.

Das hierbei anwendbare erfindungsgemäße Kommunikationsverfahren ermöglicht, dass beide Teilnehmer A und B gleichberechtigt Nutztelegramme an den jeweils anderen Teilnehmer B oder A ohne lange Reaktionszeiten versenden können. Hierzu werden beiden Teilnehmern A und B jeweils Sendezeitpunkte in einem Zeitraster vorgegeben, zu denen ein Teilnehmer A oder B dem jeweils anderen Teilnehmer B oder A ein Nutztelegramm zusenden darf. Diese Sendezeitpunkte sind Startzeitpunkte für die Versendung der Nutztelegramme. Um dabei Kollisionen zu vermeiden, wird gemäß dem erfindungsgemäßen Kommunikationsverfahren sichergestellt, dass zum jeweiligen Sendezeitpunkt des Teilnehmers A oder B der Funkkanal F nicht gerade durch den jeweils anderen Teilnehmers B oder A belegt ist. Die Information über die Belegung erfolgt anhand eines Erkennungssignals, das am Anfang des Nutztelegramms eingebettet oder dem Nutztelegramm vorangestellt wird. Ein Teilnehmer A oder B darf an einem ihm zugeordneten Sendezeitpunkt ein Nutztelegramm versenden, wenn zu diesem Zeitpunkt von dem jeweils anderen Teilnehmer B oder A kein Erkennungssignal empfangen wurde, was zugleich bedeutet, dass der Funkkanal F gerade nicht belegt und für die Versendung eines Nutztelegramms frei ist. Die Laufzeit des Erkennungssignals über den Funkkanal F von einem zum anderen Teilnehmer bestimmt im wesentlichen das Zeitintervall t von einem Sendezeitpunkt Z im Zeitraster, der zur Aussendung eines Nutztelegramms einem Teilnehmer A oder B zugeordnet ist, zum folgenden Sendezeitpunkt Z in dem Zeitraster. Dieses Zeitraster mit den Zeitintervallen t ist an einem Zeitlineal gemäß FIG 2 dargestellt. Das Erkennungssignal ist vorteilhafterweise zumindest teilweise bitcodiert und ermöglicht die schnelle Erkennung des Belegtzustands.

Die dem einen Teilnehmer(A oder B) vorgegebenen Sendezeitpunkte(Z) zum Aussenden eines Nutztelegramms sind gegenüber den Sendezeitpunkten(Z), die dem jeweils anderen Teilnehmer(B oder A) zum Aussenden eines Nutztelegramms vorgegeben sind, zeitsynchron.

Dies wird z.B. durch zwei Zeitlineale mit gleichem Zeitraster gem. FIG 2 erreicht, wobei ein Teilnehmer(A oder B) das Zeitlineal vorgibt und der andere Teilnehmer(B oder A) sein Zeitlineal der Vorgabe anpasst. Der das Zeitlineal vorgebende Teilnehmer hat nur diesbezüglich eine Masterfunktion. Ansonsten sind beide Teilnehmer beim oben beschriebenen Kommunikationsverfahren gleichberechtigt.

## Patentansprüche

1. Kommunikationsverfahren für ein Funknetzwerk mit mindestens zwei Teilnehmern (A,B), wobei ein Funkkanal (F) zwar in beiden Richtungen zwischen den Teilnehmern (A,B) genutzt wird, aber dies stets nur nacheinander in der einen und dann in der anderen Richtung, das heißt nicht gleichzeitig in beiden Richtungen, wobei den Teilnehmern (A,B) jeweils Sendezeitpunkte (Z) in einem Zeitraster vorgegeben werden, zu denen ein Teilnehmer (A oder B) dem jeweils anderen Teilnehmer (B oder A) ein Nutztelegramm zusenden darf,
**dadurch gekennzeichnet, dass**
- in jedem Nutztelegramm an seinem Anfang ein Erkennungssignal eingebettet oder ein solches Erkennungssignal dem Nutztelegramm vorangestellt ist, wobei das Erkennungssignal dazu dient, dem empfangenden Teilnehmer (A oder B) die Belegung des Funkkanals (F) mitzuteilen,
- ein Teilnehmer (A oder B) nur dann ein Nutztelegramm im zulässigen Sendezeitpunkt (Z) aussendet, wenn vom anderen Teilnehmer (B oder A) kein Erkennungssignal empfangen wurde,
- das Zeitintervall (t) von einem Sendezeitpunkt (Z) im Zeitraster, der zur Aussendung eines Nutztelegramms einem Teilnehmer (A oder B) zugeordnet ist, zum folgenden Sendezeitpunkt (Z) in dem Zeitraster, der zur Aussendung eines Nutztelegramms dem jeweils anderen Teilnehmer (B oder A) zugeordnet ist, durch die Laufzeit des Erkennungssignals auf dem Funkkanal (F) zwischen beiden Teilnehmern (A,B) bestimmt ist.

2. Kommunikationsverfahren nach einem der vorangehenden Ansprüche, **dadurch gekennzeichnet, dass** die dem einen Teilnehmer (A oder B) vorgegebenen Sendezeitpunkte (Z) zum Aussenden eines Nutztelegramms gegenüber den Sendezeitpunkten(Z), die dem jeweils anderen Teilnehmer (B oder A) zum Aussenden eines Nutztelegramms vorgegeben sind, zeitsynchron sind.

3. Kommunikationsverfahren nach einem der vorangehenden Ansprüche, **dadurch gekennzeichnet, dass** die Sendezeitpunkte (Z) zum Aussenden eines Nutztelegramms den beiden Teilnehmern (A,B) jeweils durch ein Zeitlineal mit einem Zeitraster vorgegeben werden, das durch das Zeitintervall (t) bestimmt ist.

4. Kommunikationsverfahren nach einem der vorangehenden Ansprüche, **dadurch gekennzeichnet, dass** das Erkennungssignal zumindest teilweise bitcodiert ist.

5. Kommunikationsverfahren nach einem der vorangehenden Ansprüche, **dadurch gekennzeichnet, dass** ein Teilnehmer (A oder B) das Zeitlineal vorgibt und der andere Teilnehmer (B oder A) sein Zeitlineal der Vorgabe anpasst.

6. Kommunikationsverfahren nach einem der vorangehenden Ansprüche, **dadurch gekennzeichnet, dass** die vorgegebenen Sendezeitpunkte (Z) die Startpunkte zum Aussenden der Nutztelegramme sind.

7. Kommunikationsverfahren nach einem der vorangehenden Ansprüche, **dadurch gekennzeichnet, dass** es zur Fahrzeugdiagnose verwendet wird.

8. Kommunikationsverfahren nach Anspruch 7, **dadurch gekennzeichnet, dass** ein Teilnehmer (A oder B)zur Aufnahme von Fahrzeugdaten an ein Fahrzeug angeschlossen wird und dem anderen Teilnehmer (B oder A) die Fahrzeugdaten zur Auswertung in einer Auswerteeinheit (C) zusendet.

9. Kommunikationsverfahren nach Anspruch 8, **dadurch gekennzeichnet, dass** der an das Fahrzeug angeschlossene Teilnehmer (A oder B) nach Auswertung der Fahrzeugdaten in der Auswerteeinheit (C) über den Funkkanal von dem anderen Teilnehmer (B oder A) eine Vorgabe zur Änderung einer Einstellung am Fahrzeug erhält.

10. Kommunikationsverfahren nach Anspruch 9, **dadurch gekennzeichnet, dass** die Vorgabe zur Änderung einer Einstellung am Fahrzeug auf einem Display angezeigt wird.

## Claims

1. Communication method for a radio network, having at least two subscribers (A, B), wherein although a radio channel (F) is used in both directions between the subscribers (A, B), this is always only successively in one direction and then in the other direction, that is to say not simultaneously in both directions, wherein the subscribers (A, B) have respective transmission times (Z) stipulated for them in a time pattern, at which transmission times a subscriber (A or B) is permitted to send the respective other subscriber (B or A) a user message, **characterized in that**
- the start of each user message has an embedded identification signal, or such an identification signal is a prefix to the user message, wherein the identification signal is used to notify the receiving subscriber (A or B) of the busy condition of the radio channel (F),
- a subscriber (A or B) transmits a user message at the admissible transmission time (Z) only if an identification signal has not been received from the other subscriber (B or A),
- the time interval (t) from one transmission time (Z) in the time pattern which is associated with a subscriber (A or B) for the transmission of a user message to the next transmission time (Z) in the time pattern which is associated with the respective other subscriber (B or A) for the transmission of a user message is determined by the transit time for the identification signal on the radio channel (F) between the two subscribers (A, B).

2. Communication method according to Claim 1, **characterized in that** the transmission times (Z) stipulated for one subscriber (A or B) for the transmission of a user message are in sync with the transmission times (Z) which are stipulated for the respective other subscriber (B or A) for the transmission of a user message.

3. Communication method according to one of the preceding claims, **characterized in that** the transmission times (Z) for the transmission of a user message are stipulated for the two subscribers (A, B) by a respective time ruler with a time pattern which is determined by the time interval (t).

4. Communication method according to one of the preceding claims, **characterized in that** the identification signal is at least partially bit-encoded.

5. Communication method according to one of the preceding claims, **characterized in that** one subscriber (A or B) stipulates the time ruler and the other subscriber (B or A) matches its time ruler to the stipulation.

6. Communication method according to one of the preceding claims, **characterized in that** the stipulated transmission times (Z) are the starting points for transmission of the user messages.

7. Communication method according to one of the preceding claims, **characterized in that** it is used for vehicle diagnosis.

8. Communication method according to Claim 7, **characterized in that** one subscriber (A or B) is connected to a vehicle for the purpose of recording vehicle data and sends the other subscriber (B or A) the vehicle data for evaluation in an evaluation unit (C).

9. Communication method according to Claim 8, **characterized in that** the subscriber (A or B) connected to the vehicle receives, following evaluation of the vehicle data in the evaluation unit (C), a stipulation to change a setting on the vehicle from the other subscriber (B or A) via the radio channel.

10. Communication method according to Claim 9, **characterized in that** the stipulation to change a setting on the vehicle is displayed on a display.

## Revendications

1. Procédé de communication pour un réseau radio ayant au moins deux participants ( A, B ), un canal ( F ) radio étant utilisé certes dans les deux sens entre les participants ( A, B ), mais cela toujours que successivement dans un sens puis dans l'autre, c'est-à-dire non simultanément dans les deux sens, des instants ( Z ) d'émission dans une trame de temps étant prescrits respectivement aux participants ( A, B ), instants auxquels un participant ( A ou B ) peut envoyer un télégramme utile à respectivement l'autre participant ( B ou A ),
**caractérisé en ce que**
- dans chaque télégramme utile est incorporé dans son début un signal de reconnaissance ou un signal de reconnaissance de ce genre est mis avant le télégramme utile, le signal de reconnaissance servant à faire part au participant ( A ou B ) récepteur que le canal ( F ) radio est occupé,
- un participant ( A ou B ) n'émet un télégramme utile à l'instant ( Z ) d'émission autorisé que si un signal de reconnaissance n'a pas été reçu par l'autre abonné ( B ou A ),
- l'intervalle ( t ) de temps entre un instant ( Z ) d'émission dans la trame de temps, qui est attribué à un participant ( A ou B ) pour l'émission d'un télégramme utile et l'instant ( t ) d'émission suivant dans la trame de temps, qui est attribué à l'émission d'un télégramme utile, à l'autre participant ( B ou A ), est déterminé par le temps de parcours du signal de reconnaissance sur le canal ( F ) radio entre les deux participants ( A, B ).

2. Procédé de communication suivant l'une des revendications précédentes, **caractérisé en ce que** les instants ( Z ) d'émission prescrits à l'un des participants ( A ou B ) pour l'émission d'un télégramme utile sont synchrones dans le temps par rapport aux instants ( Z ) d'émission qui sont prescrits à l'autre participant ( B ou A ) pour l'émission d'un télégramme utile.

3. Procédé de communication suivant l'une des revendications précédentes, **caractérisé en ce que** les instants ( Z ) d'émission pour l'émission d'un télégramme utile sont prescrits aux deux participants ( A, B ) respectivement par une règle de temps ayant une trame qui est déterminée par l'intervalle ( t ) de temps.

4. Procédé de communication suivant l'une des revendications précédentes, **caractérisé en ce que** le signal de reconnaissance est codé par bit au moins en partie.

5. Procédé de communication suivant l'une des revendications précédentes, **caractérisé en ce qu'**un participant ( A ou B ) prescrit la règle de temps et l'autre participant ( B ou A ) adapte sa règle de temps à la prescription.

6. Procédé de communication suivant l'une des revendications précédentes, **caractérisé en ce que** les instants ( Z ) d'émission prescrits sont les points de début de l'émission des télégrammes utiles.

7. Procédé de communication suivant l'une des revendications précédentes, **caractérisé en ce qu'**il est utilisé pour le diagnostic de véhicule.

8. Procédé de communication suivant la revendication 7, **caractérisée en ce qu'**un participant ( A ou B ) est, pour la réception de données de véhicule, raccordé à un véhicule et envoie à l'autre participant ( B ou A ) les données du véhicule pour l'exploitation dans une unité ( C ) d'exploitation.

9. Procédé de communication suivant la revendication 8, **caractérisée en ce que** le participant ( A ou B ) raccordé au véhicule reçoit, après exploitation des données du véhicule dans l'unité ( C ) d'exploitation, par le canal radio de la part de l'autre participant ( B ou A ) une prescription de modification d'un réglage du véhicule.

10. Procédé de communication suivant la revendication 9, **caractérisée en ce que** la prescription de modification d'un réglage du véhicule s'affiche sur un écran.
